(19) Europäisches Patentamt
European Patent Office
Office européen des brevets

(11) Veröffentlichungsnummer : **0 076 956**
**B1**

(12) # EUROPÄISCHE PATENTSCHRIFT

(45) Veröffentlichungstag der Patentschrift : **16.04.86**

(21) Anmeldenummer : **82108881.2**

(22) Anmeldetag : **25.09.82**

(51) Int. Cl.⁴ : **C 08 L 75/12**, C 08 K 5/52, C 09 D 3/72, C 09 J 3/16, C 08 G 18/12, C 08 G 18/42, C 08 G 18/40, C 08 L 75/06

(54) **Neue Gemische von tertiären Stickstoff aufweisenden NCO-Prepolymeren mit Hilfs- und Zusatzmitteln, sowie ihre Verwendung als Klebe- bzw. Beschichtungsmittel.**

(30) Priorität : **08.10.81 DE 3139967**

(43) Veröffentlichungstag der Anmeldung : **20.04.83 Patentblatt 83/16**

(45) Bekanntmachung des Hinweises auf die Patenterteilung : **16.04.86 Patentblatt 86/16**

(84) Benannte Vertragsstaaten : **BE DE FR GB IT**

(56) Entgegenhaltungen :
**EP-A- 0 009 755**
**DE-A- 1 922 626**
**DE-B- 1 152 535**

(73) Patentinhaber : **BAYER AG**
**Konzernverwaltung RP Patentabteilung**
**D-5090 Leverkusen 1 Bayerwerk (DE)**

(72) Erfinder : **König, Eberhard, Dr.**
**Gelber Weg 22**
**D-6242 Kronberg (DE)**
Erfinder : **Hombach, Rudolf, Dr.**
**Johann-Janssen-Strasse 24**
**D-5090 Leverkusen (DE)**
Erfinder : **Dollhausen, Manfred, Dr.**
**Herzogenfeld 21**
**D-5068 Odenthal (DE)**
Erfinder : **Pedain, Josef, Dr.**
**Haferkamp 6**
**D-5000 Koeln 80 (DE)**

**EP 0 076 956 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Die Erfindung betrifft neue Gemische von bestimmten, tertiären Aminstickstoff und aromatisch gebundene Isocyanatgruppen aufweisenden Polyurethanprepolymeren mit bestimmten Hilfs- und Zusatzmitteln, die einerseits in Abwesenheit von Feuchtigkeit gut lagerfähig sind und andererseits unter dem Einfluß von Luftfeuchtigkeit äußerst rasch aushärten, sowie die Verwendung dieser Gemische als Klebe- bzw. Beschichtungsmittel für beliebige flexible oder nicht-flexible Substrate.

Aromatisch gebundene Isocyanatgruppen aufweisende Polyurethan-Prepolymere, die eingebaute tertiäre Aminstickstoffatome aufweisen, stellen, chemisch gesehen sehr labile Systeme dar, da sie wegen des eingebauten Katalysators äußerst reaktionsfähig sind. Andererseits sind derartige Systeme wegen ihrer einfachen Verarbeitbarkeit als Einkomponentensystem, beispielsweise als Klebe- oder Beschichtungsmittel von erheblichem praktischem Interesse. Die bislang bekannt gewordenen Einkomponentensysteme auf Basis von eingebaute tertiäre Aminstickstoffatome aufweisenden NCO-Prepolymeren haben sich jedoch insbesondere auf dem Klebstoffsektor noch nicht durchsetzen können, da sie die Erwartungen der Praxis bezüglich physiologischer Unbedenklichkeit, guter Lagerfähigkeit und kurzer Abbindezeiten noch nicht in ausreichendem Maße befriedigen konnten.

So sind beispielsweise aus der US-PS 3 317 481 Lösungen von aromatischen Polyisocyanaten, u. a. auch von tertiäre Stickstoffatome aufweisenden NCO-Prepolymeren in speziellen Amid- oder Sulfoxidgruppen enthaltenden Lösungsmitteln, z. B. Dimethylformamid oder Dimethylsulfoxid, bekannt geworden. Gegen die Verwendung als einfach zu handhabenden Klebstoff spricht der Charakter der genannten Lösungsmittel : Sie sind ausgesprochene Hochsieder, die lange im Klebfilm verweilen, und physiologisch bedenklich. Da sie zudem noch aggressive Lösungsmittel für viele Kunststoffarten sind, können sie bei ihrer Verwendung als Klebstoff für Kunststoffe ein bleibende Quellung und Verformung der zu verklebenden Substrate bewirken.

In der GB-PS 1 126 094 werden NCO-Vorpolymerisate auf Basis von 4,4'-Diisocyanatodiphenylmethan, trifunktionellen, basischen Polyethern und üblichen Weichmachern beschrieben. Klebstoffe auf Basis derartiger NCO-Vorpolymerisate haben, wie eigene Untersuchungen zeigen im allgemeinen nur eine sehr geringe Substrathaftung ; für Verklebungen von gebräuchlichen Kunststoffen, wie z. B. PVC oder glasfaserverstärktem Polyester-Harz, sind sie wegen nicht gegebener Haftung bzw. Adhäsionsbruches des Klebfilms auf besagten Polyester-Harz-Kunststoffen ungeeignet.

In der DE-AS 1 922 626 werden NCO-Vorpolymerisate auf Basis von basischen Polyethern und 2,4-Diisocyanatotoluol beschrieben. Auch diese NCO-Vorpolymerisate sind aus den bereits obengenannten Gründen insbesondere als Klebstoff für Kunststoffe ungeeignet. Darüber hinaus erfordert die Verwendung von Diisocyanatotoluol wegen dessen relativ hohem Dampfdruck zusätzliche Maßnahmen, um den Gehalt dieses Diisocyanates im Endprodukt zu erniedrigen.

Die in EP-OS 15 465 beschriebenen Lederlacke auf Basis von NCO-Vorpolymerisaten sind ebenso wenig als Einkomponentenklebemittel geeignet, da ihre Abbindegeschwindigkeit auch in Gegenwart von Luftfeuchtigkeit viel zu langsam ist.

Es war die der vorliegenden Erfindung zugrundeliegende Aufgabe, neue Einkomponenten-Systeme zur Verfügung zu stellen, die den obengenannten Anforderungen der Praxis bezüglich physiologischer Unbedenklichkeit, Lagerstabilität und Abbindezeit gerecht werden. Diese Aufgabe konnte mit den nachstehend näher beschriebenen erfindungsgemäßen Gemischen gelöst werden.

Gegenstand der Erfindung sind in Abwesenheit von Feuchtigkeit laberstabile Gemische, bestehend aus

a) 100 Gewichtsteilen an, 0,1 bis 0,5 Gew.-% an eingebauten tertiären Stickstoffatomen, 3 bis 15 Gew.-% an innerhalb von Polyesterketten angeordneten Struktureinheiten der Formel

$$—O—CH_2—C(CH_3)_2—CH_2—O—$$

und 3 bis 12 Gew.-% endständige Isocyanatgruppen aufweisenden Polyurethanprepolymeren, die durch Umsetzung von

a1) Polyisocyanaten bzw. Polyisocyanatgemischen der Diphenylmethanreihe mit Gemischen aus

a2) mindestens einem, Neopentylglykol einkondensiert enthaltenden, linearen oder schwach verzweigten Polyesterpolyol des OH-Zahlbereichs 50 bis 250 oder Gemischen derartiger Polyesterpolyole mit mindestens einem, kein einkondensiertes Neopentylglykol enthaltenden linearen oder schwach verzweigten Polyesterpolyol des OH-Zahlbereichs 50 bis 250, mit

a3) gegebenenfalls im Gemisch mit neutralen, di- oder trifunktionellen Polyhydroxypolyethern des OH-Zahlbereichs 28 bis 500 vorliegenden, di- oder trifunktionellen, tertiäre Aminstickstoffatome aufweisenden Polyhydroxypolyethern des OH-Zahlbereichs 56 bis 500, und gegebenenfalls mit

a4) zwei- oder drei-wertigen Alkoholen des OH-Zahlbereichs 500 bis 1810

unter Einhaltung eines NCO OH-Äquivalentverhältnisses von 1,7 : 1 bis 5 : 1 erhalten worden sind,

b) 3 bis 25 Gewichtsteilen mindestens eines Phosphorsäureesters der Formel

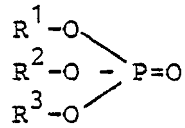

in welcher $R^1$, $R^2$ und $R^3$ für gleiche oder verschiedene Reste stehen und jeweils einen, gegebenenfalls $C_1$-$C_{12}$-alkylsubstituierten, Phenylrest oder einen gesättigten aliphatischen Kohlenwasserstoffrest mit 6 bis 18 Kohlenstoffatomen bedeuten,

c) 5 bis 50 Gewichtsteilen eines oder mehrerer inerter Lösungsmittel eines zwischen 40 und 140 °C liegenden Siedepunkts und

d) gegebenenfalls weiteren in der technischen Polyurethanchemie an sich bekannten Hilfs- und Zusatzmitteln.

Gegenstand der Erfindung ist auch die Verwendung dieser Gemische als Klebemittel für die Verklebung beliebiger flexibler oder nicht-flexibler Substrate.

Gegenstand der Erfindung ist schließlich auch die Verwendung dieser Gemische als Beschichtungsmittel für die Beschichtung beliebiger flexibler oder nicht-flexibler Substrate.

Die erfindungsgemäßen Gemische bestehen aus den genannten Komponenten a), b), c) und d).

Bei der Komponente a) der erfindungsgemäßen Gemische handelt es sich um endständige Isocyanatgruppen aufweisende Prepolymere mit dem obengenannten Gehalt an eingebauten tertiären Aminstickstoffatomen, Struktureinheiten der Formel

$$—O—CH_2—C(CH_3)_2—CH_2—O—$$

und Isocyanatgruppen. Die bevorzugten NCO-Vorpolymerisate weisen einen Gehalt an eingebauten tertiären Aminstickstoffatomen von 0,2 bis 0,4 Gew.-%, einen Gehalt an Struktureinheiten der genannten Formel von 4 bis 10 Gew.-% und einen Gehalt an Isocyanatgruppen von 6 bis 10 % auf. Der Gehalt an tertiären Stickstoffatomen kann beispielsweise titrimetrisch nach Blockierung der Isocyanatgruppen, beispielsweise mit Ethanol, bestimmt werden. Der Gehalt an Struktureinheiten der genannten Formel kann beispielsweise durch gaschromatographische Analyse des Hydrolysats der Vorpolymerisate ermittelt werden. Der titrimetrisch in an sich bekannter Weise ermittelbare NCO-Gehalt muß wegen des bei der NCO-Titration (Dibutylamin-Methode) gleichzeitig erfaßten Stickstoffgehalts entsprechend korrigiert werden.

Die Isocyanatgruppen aufweisenden Vorpolymerisate werden in an sich bekannter Weise durch Umsetzung der obengenannten Komponenten a1), a2), a3) und gegebenenfalls a4) hergestellt.

Bei der Komponente a1) handelt es sich um Polyisocyanate bzw. Polyisocyanatgemische der Diphenylmethanreihe, d. h. um 4,4'- und/oder 2,4'-Diisocyanatodiphenylmethan bzw. um Gemische dieser Isomeren mit ihren höheren Homologen, wie sie in an sich bekannter Weise durch Phosgenierung von Anilin-Formaldehyd-Kondensaten erhalten werden. Auch in an sich bekannter Weise durch Umsetzung mit niedermolekularen Glykolen oder durch partielle Carbodiimidisierung modifizierte Polyisocyanate der genannten Art, insbesondere dergestalt verflüssigtes 4,4'-Diisocyanatodiphenylmethan sind als Komponente a1) geeignet. Der Begriff « Polyisocyanate bzw. Polyisocyanatgemische der Diphenylmethanreihe » soll somit auch derartige Modifizierungsprodukte umfassen.

Bei der Komponente a2) handelt es sich um einkondensiertes Neopentylglykol enthaltende Polyester oder Polyestergemische, wobei im Falle der Verwendung von Polyestergemischen mindestens eine Komponente einkondensiertes Neopentylglykol im einer solchen Menge enthalten muß, daß die obengenannten Bedingungen bezüglich des Gehalts an Struktureinheiten der genannten Formel erfüllt sind. Im übrigen handelt es sich bei den Polyestern a2) um lineare oder schwach verzweigte Polyesterpolyole des OH-Zahlbereichs 50 bis 250, vorzugsweise 56 bis 224.

Die Herstellung derartiger Polyesterpolyole erfolgt nach den an sich bekannten Methoden aus mehrwertigen Carbonsäuren bzw. Carbonsäureanhydriden, vorzugsweise Dicarbonsäuren bzw. Dicarbonsäureanhydriden wie z. B. Bernsteinsäure, Adipinsäure, Sebacinsäure, Phthalsäure, Phthalsäureanhydrid, Isophthalsäure, Maleinsäure bzw. Maleinsäureanhydrid oder Hexahydrophthalsäureanhydrid und mehrwertigen, vorzugsweise zweiwertigen Alkoholen des Molekulargewichtsbereichs 62-200 wie z. B. Ethylenglykol, 1,2-Dihydroxypropan, 1,3-Dihydroxypropan, 1,4-Dihydroxybutan, Neopentylglykol, 1,6-Dihydroxyhexan, Glycerin und/oder Trimethylolpropan. Besonders bevorzugte alkoholische Aufbaukomponente für die Polyesterpolyole ist neben dem erfindungswesentlichen Neopentylglykol 1,6-Dihydroxy-hexan. Mehrwertige Alkohole wie Glycerin oder Trimethylolpropan werden bei der Herstellung der Polyesterpolyole allenfalls in Mengen von bis zu 30-Hydroxyläquivalent-%, bezogen auf Gesamtmenge der einzusetzenden Alkohole, eingesetzt. Bei der Herstellung der Polyesterpolyole werden selbstverständlich die alkolholischen Aufbaukomponenten im Überschuß gegenüber den Säuren bzw. Säureanhydriden eingesetzt. Besonders bevorzugt sind, den gemachten Ausführungen entsprechende, Polyesterpolyole auf Basis von Adipinsäure.

Bei der Komponente a3) handelt es sich um tertiären Stickstoff aufweisende, di- und/oder trifunktionelle Polyhydroxypolyether des OH-Zahlbereichs 56 bis 500, vorzugsweise 112 bis 224, die gegebenenfalls zusammen mit stickstofffreien Polyetherpolyolen einer zwischen 28 und 500, vorzugsweise zwischen 56 und 500 liegenden OH-Zahl zum Einsatz gelangen können. Die Herstellung derartiger Polyetherpolyole erfolgt in an sich bekannter Weise durch Alkoxylierung geeigneter Startermoleküle wie z. B. Ammoniak, Methylamin, Ethylamin, N-Methyl-diethanolamin, Ethanolamin, Propanolamin, oder — im Falle der stickstofffreien Polyetherpolyole — beispielsweise Wasser, Ethylenglykol, 1,2-Dihydroxypropan oder Trimethylolpropan unter Verwendung von Alkylenoxiden wie Ethylenoxid und insbesondere Propylenoxid bzw. Gemischen derartiger Alkylenoxide.

Bevorzugte Polyetherpolyole a3) sind die entsprechen den Propoxylierungsprodukte der beispielhaft genannten Startermoleküle.

Bei der Herstellung der Isocyanatgruppen aufweisenden Vorpolymerisate a) können als weitere Aufbaukomponente auch niedermolekulare di- und trifunktionelle Alkohole des OH-Zahlbereichs 500 bis 1810 wie z. B. Ethylenglykol, Propylenglykol, Diethylenglykol, Tripropylenglykol, N-Methyl-diethanolamin oder Trimethylolpropan in Mengen von bis zu 30 Hydroxyläquivalent-% mitverwendet werden, obwohl dies weniger bevorzugt ist.

Die Herstellung der Isocyanatgruppen aufweisenden Vorpolymerisate a) erfolgt im allgemeinen dergestalt, daß man Gemische der Aufbaukomponenten a2), a3) und gegebenenfalls a4) mit der im Überschuß zum Einsatz gelangenden Polyisocyanatkomponente a1), d. h. unter Einhaltung eines NCO/OH-Äquivalentverhältnisses von 1,7 : 1 bis 5 : 1, vorzugsweise 2,5 : 1 bis 3,5 : 1 bei 40 bis 70 °C zur Reaktion bringt.

Bei der Komponente b) der erfindungsgemäßen Gemische handelt es sich um Phosphorsäureester der obengenannten Formel, wobei die Reste $R^1$, $R^2$ und $R^3$ die bereits genannte Bedeutung haben. Vorzugsweise werden solche phosphorsäureester der genannten Formel eingesetzt, für welche die genannten Reste für gleiche oder verschiedene Reste stehen und jeweils einen gegebenenfalls methylsubstituierten Phenylrest oder einen gesättigten aliphatischen Kohlenwasserstoffrest mit 6 bis 10 Kohlenstoffatomen stehen.

Besonders gut geeignete Phosphorsäureester sind beispielsweise Triphenylphosphat, Diphenyloctylphosphat, Diphenylkresylphosphat, Trihexylphosphat oder Trioctylphosphat, wobei es sich bei dem in diesen Verbindungen vorliegenden Octylrest vorzugsweise um einen 2-Ethylhexyl-Rest handelt.

In den erfindungsgemäßen Gemischen liegen pro 100 Gew.-Teilen der Komponente a) im allgemeinen 3 bis 25 Gewichtsteile, vorzugsweise 5 bis 15 Gewichtsteile der Komponente b) vor.

Bei der Komponente c) handelt es sich um gegenüber Isocyanatgruppen inerte Lösungsmittel eines Siedebereichs von etwa 40 bis 140 °C, vorzugsweise 60-130 °C. Beispiele hierfür sind Acetonitril, Methylenchlorid, Toluol, Xylol, Methylethyl- bzw. Methylisobutylketon, Glykolmonomethylether-acetat, Dimethoxyethan, Essigsäureethyl- oder Essigsäurebutylester. Erfindungsgemäß bevorzugt sind Toluol, Essigester und Methylethylketon. Beliebige Gemische derartiger Lösungsmittel können selbstverständlich auch eingesetzt werden.

In den erfindungsgemäßen Gemischen liegen pro 100 Gew.-Teilen der Komponente a) im allgemeinen 5 bis 50 Gew.-Teile, vorzugsweise 5 bis 30 Gew.-Teile und insbesondere 10 bis 20 Gew.-Teile der Komponente c) (Lösungsmittel) vor.

Neben diesen erfindungswesentlichen Komponenten a), b) und c) können in den erfindungsgemäßen Gemischen auch noch beliebige in der Polyurethanchemie an sich bekannte Hilfs- und Zusatzmittel vorliegen. Beispiele hierfür sind Füllstoffe, Pigmente, Verlaufshilfsmittel und dergleichen.

Die Herstellung der erfindungsgemäßen Gemische kann beispielsweise durch Abmischung der Einzelkomponenten erfolgen. Besonders zweckmäßig ist jedoch eine Ausführungsform der Herstellung der Gemische, welche darin besteht, daß man die Polyisocyanatkomponente a1) mit dem Phosphorsäureester b) und dem Lösungsmittel c) abmischt und bei Raumtemperatur unter Rühren die Polyolkomponenten a2) bis a4) unter Rühren einzeln oder in beliebiger Reihenfolge hinzugibt. Sämtliche Komponenten werden hierbei vorzugsweise in der für Reaktionen mit Isocyanaten üblichen, wasserfreien Form (Wassergehalt kleiner als 0,1 Gew.-%) eingesetzt. Die Reaktionsmischung wird unter Feuchtigkeitsausschluß (Trockenrohr) bei etwa 40-70 °C für ca. 30-60 Minuten gerührt, bis der berechnete NCO-Gehalt erreicht bzw. leicht unterschritten ist. Die abgekühlten NCO-Vorpolymerisat-Lösungen werden anschließend in feuchtigkeitsgeschützte Gebinde abgefüllt, in dieser Form sind sie lagerstabil und anwendungsfertig.

Die erfindungsgemäßen Gemische weisen bei 25 °C im allgemeinen eine Viskosität von 1 000 bis 20 000, vorzugsweise 3 000 bis 6 000 mPa·s auf. Die für den jeweiligen Einsatzzweck zweckmäßigste Viskosität kann leicht durch die Menge des Lösungsmittels eingestellt werden. Die erfindungsgemäßen Gemische können nach den üblichen Auftragstechniken z. B. durch Pinsel-, Spachtel- oder Sprühauftrag verarbeitet werden. Sie eignen sich sowohl als Beschichtungsmittel zur Herstellung von Beschichtungen auf beliebigen flexiblen oder nicht-flexiblen Substraten wie z. B. solchen auf Basis von Metallen, Holz oder Kunststoffen und insbesondere als Klebemittel zur Verklebung derartiger Substrate. Besonders gut geeignet sind die erfindungsgemäßen Gemische zur Verklebung von PVC, Kunststoffen auf Basis von glasfaserverstärkten Polyesterharzen, Polycarbonat, Styrol-Maleinsäureanhydrid-Copolymerisaten oder Polypropylen. Auch die Verklebung von Kunststoffteilen mit Metallen ist unter Verwendung der erfindungsgemäßen Gemische möglich.

Durch den Gehalt an Phosphorsäureestern der erfindungswesentlichen Art wird die Lagerstabilität der erfindungsgemäßen Gemische ganz beträchtlich erhöht, ohne die Abbindezeiten über Gebühr zu

verlängern. Trotz der hohen Lagerstabilität der erfindungsgemäßen Gemische härten Beschichtungen mit einer Schichtdicke von ca. 0,1-0,5 mm in Gegenwart von Luftfeuchtigkeit bei Raumtemperatur schnell durch, so daß nach einer kurzen Ablüftezeit von 5-15 Minuten und nach nur 15-30-minütigem Anpreßdruck Verklebungen einer ausgezeichneten Scherfestigkeit erhalten werden.

Die erfindungsgemäßen Gemische stellen daher besonders wertvolle, leicht handhabbare Einkomponenten-Klebstoffe beispielsweise für die Serienverklebung verschiedener Kunststoffteile im Automobilbau dar.

In den nachfolgenden Beispielen beziehen sich alle Prozentangaben auf Gewichtsprozente.

### Beispiel 1

Dieses Beispiel zeigt die Herstellung eines erfindungsgemäßen Gemischs und dessen Verwendung als Klebemittel.

1 875 Gew.-Teile frisch destilliertes 4,4'-Diisocyanatodiphenylmethan werden mit 538 Gew.-Teilen Toluol und 268 Gew.-Teilen Tris-(2-Ethyl-hexyl)-phosphat gemischt. In diese Mischung werden unter Rühren nacheinander eingetragen : 1 000 Gew.-Teile eines Hydroxylpolyesters aus Adipinsäure, 1,6-Dihydroxyhexan und Neopentylglykol (Gewichtsverhältnis der Diole : 1,9 : 1) der OH-Zahl 56, 550 Gew.-Teile propoxyliertes Bisphenol A der OH-Zahl 200 und 1 140 Gew.-Teile propoxyliertes Triethanolamin der OH-Zahl 147. Nach einer Reaktionszeit von 40 Minuten bei 50-60 °C wird ein erfindungsgemäßes Gemisch mit einer Viskosität bei Raumtemperatur von ca. 14 000 mPa.s erhalten. Das Gemisch wird sofort in feuchtigkeitsgeschützte Gebinde abgefüllt und ist in derartigen Gebinden auch nach halbjähriger Lagerung unverändert. Das in dem Gemisch vorliegende NCO-Vorpolymerisat weist einen Gehalt an Struktureinheiten der Formel

$$—O—CH_2—C(CH_3)_2—CH_2—O—$$

von 4,0 %, einen Gehalt an tertiären Aminstickstoff von 0,31 % und einen Gehalt an Isocyanatgruppen von 8,2 % auf.

Zur Prüfung der klebetechnischen Eigenschaften des so hergestellten Gemischs werden nicht vorbehandelte Prüfplatten auf Basis von glasfaserverstärktem Polyesterharz (30 % Glasgehalt) der Abmessung 2 × 4 × 0,3 cm eingestrichen und nach 5 Minuten so zusammengelegt, daß eine überlappende Fläche von 2 $cm^2$ vorliegt, wobei eine der sich berührenden Fläche vorher eingestrichen worden war. Die Prüfkörper werden anschließend während der unten angegebenen Zeit mit einem Druck von 30 $kp/cm^2$ zusammengepreßt. Die Ermittlung der Scherfestigkeit erfolgte in einer Zugprüfmaschine mit einem Spindelvorschub von 100 mm/min. Diese Prüfung wird sofort nach dem Preßvorgang durchgeführt.

Scherfestigkeit nach :

| | |
|---|---|
| 15' | 1,5 $N/mm^2$ |
| 30' | 2,4 $N/mm^2$ |
| 60' | 3,0 $N/mm^2$ |
| 24 h | 7,0 $N/mm^2$ |

Die Prüfung der Filmtrocknung wird so durchgeführt, daß ein 0,5 mm dicker Film auf eine Glasplatte aufgezogen und manuell der Zeitpunkt, an dem die Klebstoffoberfläche klebfrei ist, bestimmt wird.

Filmtrocknung :

Nach 30 Minuten klebfreier Film.

Vergleichsbeispiel 1

Dieses Beispiel erläutert die Verbesserung der Lagerstabilität durch den Zusatz der genannten Phosphorsäureester.

Es werden alle in Beispiel 1 durchgeführten Verfahrensschritte mit der Ausnahme wiederholt, daß das Gemisch ohne den angegebenen Zusatz an Trioctylphosphat hergestellt wird. Hierbei werden folgende Beobachtungen gemacht : Bereits während des Abkühlens der noch gerührten NCO-Vorpolymerisat-Lösung bilden sich Schlieren und sichtbare Gelteilchen. Beim Abgießen entsteht auf der Oberfläche eine Haut. In den verschlossenen Gebinden härten die gelagerten NCO-Vorpolymerisat-Proben allmählich durch.

### Beispiel 2

Dieses Beispiel beschreibt die Herstellung einer erfindungsgemäßen Mischung und ihre Verwendung als Klebstoff.

1 230 Gew.-Teile eines Polyisocyanatgemischs der Diphenylmethanreihe mit einem NCO-Gehalt von 31 % und einer Viskosität bei 25 °C von 100 mPa.s werden mit 830 Gew.-Teilen Toluol vermischt. Anschließend werden 365 Gew.-Teile Diphenylkresylphosphat zugegeben. Unter Rühren werden anschließend nacheinander folgende wasserfreie, flüssige, bzw. geschmolzene Polyhydroxylverbindungen hinzugefügt : 1 270 Gew.-Teile eines Hydroxylpolyesters auf Basis von Adipinsäure, 1,6-Dihydroxyhexan und Neopentylglykol (Gewichtsverhältnis der Glykole : 1,88 : 1) der OH-Zahl 66, 380 Gew.-Teile propoxyliertes Triethanolamin der OH-Zahl 147 und 25 Gew.-Teile ethoxyliertes Ethylamin der OH-Zahl 448. Das Gemisch wird während 40 Minuten bei 50-70 °C gerührt. Es wird auf diese Weise ein erfindungsgemäßes Gemisch erhalten, welches bei 25 °C eine Viskosität von 4 000 mPa·s aufweist. Das Gemisch wird in feuchtigkeitsgeschützte Gebinde abgefüllt. Das in dem Gemisch vorliegende NCO-Vorpolymerisat weist 8,3 % an Struktureinheiten der Formel

$$—O—CH_2—C(CH_3)_2—CH_2—O—$$

0,21 % an tertiären Stickstoffatomen und 9,1 % Isocyanatgruppen auf.

Ein Klebetest analog Beispiel 1 führt zu folgenden Scherfestigkeiten :

Scherfestigkeit nach :

| | |
|---|---|
| 15′ | 1,3 N/mm$^2$ |
| 30′ | 3,1 N/mm$^2$ |
| 60′ | 3,2 N/mm$^2$ |
| 24 h | 7,7 N/mm$^2$ |

Filmtrocknung :

Nach 20 Minuten klebfreier Film.

Beispiel 3

Dieses Beispiel beschreibt ebenfalls die Herstellung eines erfindungsgemäßen Gemischs und dessen Verwendung als Klebstoff.

1 125 Gew.-Teile frisch destilliertes 4,4′-Diisocyanatodiphenylmethan werden mit 326 Gew.-Teilen Toluol und 163 Gew.-Teilen Diphenyl-octyl-phosphat vermischt. Zu der so erhaltenen gerührten Mischung werden bei Raumtemperatur folgende wasserfreie, flüssige bzw. aufgeschmolzene Polyhydroxylverbindungen gegeben : 430 Gew.-Teile des Hydroxylgruppen aufweisenden Polyesters auf Basis von Adipinsäure, 1,6-Hexandiol und Neopentylglykol gemäß Beispiel 2, 400 Gew.-Teile eines Hydroxylgruppen aufweisenden Polyesters auf Basis von Isophthalsäure, Adipinsäure, Hexandiol und Trimethylolpropan (27,4 Hydroxyläquivalent-% TMP) der OH-Zahl 140, sowie 760 Gew.-Teile propoxyliertes Triethanolamin der OH-Zahl 147. Das Reaktionsgemisch wird während 40 Minuten bei 50-60 °C gerührt. Die so erhaltene erfindungsgemäße Mischung weist bei 25 °C eine Viskosität von 17 000 mPa·s auf. Sie wird in eine Gebinde abgefüllt und kann bei Feuchtigkeitsausschluß unverändert während 6 Monaten gelagert werden.

Das in dem Gemisch vorliegende NCO-Vorpolymerisat weist einen Gehalt an Struktureinheiten der Formel

$$—O—CH_2—C(CH_3)_2—CH—O—$$

von 3,0 %, einen Gehalt an tertiären Stickstoff von 0,34 % und einen Gehalt an Isocyanatgruppen von 8,5 % auf. Durch Zugabe weiterer Lösungsmittel kann das Gemisch auf Sprühviskosität verdünnt werden. Wie in Beispiel 1 beschrieben werden folgende Eigenschaften festgestellt :

Scherfestigkeit nach :

| | |
|---|---|
| 15′ | 1,7 N/mm$^2$ |
| 30′ | 2,2 N/mm$^2$ |
| 60′ | 2,7 N/mm$^2$ |
| 24 h | 5,0 N/mm$^2$ |

Filmtrocknung :

Nach 40 Minuten klebfreier Film.

Beispiel 4

Dieses Beispiel zeigt die Herstellung eines erfindungsgemäßen Gemischs welches gut als Klebstoff für PVC geeignet ist.

875 Gew.-Teile frisch destilliertes 4,4'-Diisocyanatodiphenylmethan werden mit 357 Gew.-Teilen Toluol und 100 Gew.-Teilen Trioctylphosphat gemischt. Unter Rühren werden hierzu folgende wasserfreie, flüssige bzw. aufgeschmolzene Polyhydroxylverbindungen gegeben : 250 Gew.-Teile eines Hydroxylpolyesters aus Adipinsäure und Neopentylglykol der OH-Zahl 224, 380 Gew.-Teile propoxyliertes Triethanolamin der OH-Zahl 147 und 420 Gew.-Teile eines Polyhydroxypolyesters auf Basis von Adipinsäure und 1,6-Dihydroxyhexan der OH-Zahl 133. Das Reaktionsgemisch wird während einer Stunde bei 60-80 °C gerührt. Man erhält 2 382 Gew.-Teile eines schwach gelb gefärbten erfindungsgemäßen Gemischs mit einer Viskosität bei 25 °C von 20 000 mPa·s. In dieser Form oder gegebenenfalls nach weiterer Lösungsmittelzugabe ist das Gemisch gebrauchsfertig. Das in dem Gemisch vorliegende NCO-Vorpolymerisat weist einen Gehalt an Struktureinheiten der Formel

$$—O—CH_2—C(CH_3)_2—CH_2—O—$$

von 7,5 %, einen Gehalt an tertiären Stickstoffatomen von 0,24 % und einen Gehalt an Isocyanatgruppen von 8,7 % auf. Die Prüfung der Schälfestigkeit an PVC-Testmaterial erfolgt gemäß DIN 53 273. Als Probekörper dienen 3 cm breite Streifen einer 4 mm dicken PVC-Folie, die 30 Gew.-Teile Dioctylphthalat als Weichmacher enthält. Die Probekörper werden 15 Minuten nach dem Klebstoffauftrag zusammengelegt und 24 Stunden bei einem Druck von 0,4 N/mm² gepreßt. Die Schälfestigkeit wird in einer Zugprüfmaschine mit einem Spindelvorschub von 100 mm/min. ermittelt.

Schälfestigkeit :

8,4 N/mm mit Materialeinriß.

**Patentansprüche**

1. In Abwesenheit von Feuchtigkeit lagerstabile Gemische bestehend aus

a) 100 Gewichtsteilen an 0,1 bis 0,5 Gew.-% an eingebauten tertiären Stickstoffatomen, 3 bis 15 Gew.-% innerhalb von Polyester angeordneten Struktureinheiten der Formel

$$—O—CH_2—C(CH_3)_2—CH_2—O—$$

und 3 bis 12 Gew.-% endständige Isocyanatgruppen aufweisenden Polyurethanprepolymeren, die durch Umsetzung von

a1) Polyisocyanaten bzw. Polyisocyanatgemischen der Diphenylmethanreihe mit Gemischen aus

a2) mindestens einem, Neopentylglykol einkondensiert enthaltenden, linearen oder schwach verzweigten Polyesterpolyol des OH-Zahlbereichs 50 bis 250 oder Gemischen derartiger Polyesterpolyole mit mindestens einem, kein einkondensiertes Neopentylglykol enthaltenden linearen oder schwach verzweigten Polyesterpolyol des OH-Zahlbereichs 50 bis 250, mit

a3) gegebenenfalls im Gemisch mit neutralen, di- oder trifunktionellen Polyhydroxypolyethern des OH-Zahlbereichs 28 bis 500 vorliegenden, di- oder trifunktionellen, tertiäre Aminstickstoffatome aufweisenden Polyhydroxypolyethern des OH-Zahlbereichs 56 bis 500, und gegebenenfalls mit

a4) zwei oder drei-wertigen Alkoholen des OH-Zahlbereichs 500 bis 1 810

unter Einhaltung eines NCO-OH-Äquivalentverhältnisses von 1,7 : 1 bis 5 : 1 erhalten worden sind,

b) 3 bis 25 Gewichtsteilen mindestens eines Phosphorsäureesters der Formel

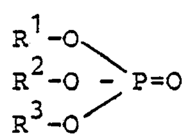

in welcher $R^1$, $R^2$ und $R^3$ für gleiche oder verschiedene Reste stehen und jeweils einen gegebenenfalls $C_1$-$C_{12}$-alkylsubstituierten Phenylrest oder einen gesättigten aliphatischen Kohlenwasserstoffrest mit 6 bis 18 Kohlenstoffatomen bedeuten,

c) 5 bis 50 Gewischtsteilen eines oder mehrerer inerter Lösungsmittel eines zwischen 40 und 140 °C liegenden Siedepunkts und

d) gegebenenfalls weiteren in der technischen Polyurethanchemie an sich bekannten Hilfs- und Zusatzmitteln.

2. Verwendung der Gemische gemäß Anspruch 1 als unter dem Einfluß von Feuchtigkeit aushärtbaren Klebemitteln für die Verklebung beliebiger flexibler oder nicht-flexibler Substrate.

3. Verwendung der Gemische gemäß Anspruch 1 als unter dem Einfluß von Feuchtigkeit aushärtbaren Beschichtungsmitteln für die Beschichtung beliebiger flexibler oder nicht-flexibler Substrate.

## Claims

1. Mixtures which are stable in storage in the absence of moisture, consisting of

a) 100 parts by weight of polyurethane prepolymers containing 0.1 to 0.5 % by weight of incorporated tertiary nitrogen atoms, 3 to 15 % by weight of structural units of the formula

$$—O—CH_2—C(CH_3)_2—CH_2—O—$$

which are positioned in polyester, and 3 to 12 % by weight of terminal isocyanate groups, which polyurethane prepolymers have been obtained by reacting

a1) polyisocyanates or polyisocyanate mixtures of the diphenylmethane series with mixtures of

a2) at least one linear or slightly branched polyester polyol which has an OH number in the range of 50 to 250 and contains neopentyl glycol condensed therein, or mixtures of such polyester polyols with at least one linear or slightly branched polyester polyol which has an OH number in the range of 50 to 250 and does not contain any neopentyl glycol condensed therein, with

a3) di- or trifunctional polyhydroxy polyethers which have an OH number in the range of 56 to 500, contain tertiary aminonitrogen atoms and are optionally mixed with neutral, di- or trifunctional polyhydroxy polyethers having an OH number in the range of 28 to 500, and optionally with

a4) di- or tri-hydric alcohols having an OH number in the range of 500 to 1 810,

while adhering to an NCO-OH equivalent ratio of 1.7 : 1 to 5 : 1,

b) 3 to 25 parts by weight of at least one phosphoric acid ester of the formula

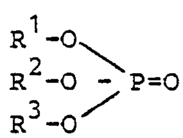

in which $R^1$, $R^2$ and $R^3$ represent identical or different radicals and each denote an optionally $C_1$-$C_{12}$-alkyl-substituted phenyl radical or a saturated aliphatic hydrocarbon radical with 6 to 18 carbon atoms,

c) 5 to 50 parts by weight of one or more inert solvents having a boiling point between 40 and 140 °C and

d) optionally, other auxiliaries and additives known in industrial polyurethane chemistry.

2. Use of the mixtures according to Claim 1 as adhesives, which can be hardened under the influence of moisture, for bonding any desired flexible or non-flexible substrates.

3. Use of the mixtures according to Claim 1 as coating agents, which can be hardened under the influence of moisture, for coating any desired flexible or non-flexible substrates.

## Revendications

1. Mélanges stables à la conservation en absence d'humidité et comprenant :

a) 100 parties en poids de prépolymères de polyuréthanes comportant 0,1 à 0,5 % en poids d'atomes d'azote tertiaires incorporés, 3 à 15 % en poids de motifs structuraux disposés à l'intérieur de chaînes de polyesters et répondant à la formule :

$$—O—CH_2—C(CH_3)_2—CH_2—O—$$

et 3 à 12 % en poids de groupes isocyanate terminaux, ces prépolymères ayant été obtenus par la réaction :

a1) de polyisocyanates ou de mélanges de polyisocyanates de la série du diphénylméthane avec des mélanges

a2) d'au moins un polyesterpolyol linéaire ou faiblement ramifié, contenant du néopentylglycol condensé et ayant un indice OH se situant dans l'intervalle de 50 à 250, ou des mélanges de tels polyesterpolyols avec au moins un polyesterpolyol linéaire ou faiblement ramifié ne contenant pas de néopentylglycol condensé et ayant un indice OH se situant dans l'intervalle de 50 à 250, avec

a3) des polyhydroxypolyéthers difonctionnels ou trifonctionnels comportant des atomes d'azote amino tertiaires, ayant un indice OH se situant dans l'intervalle de 56 à 500 et se présentant éventuellement en mélange avec des polyhydroxypolyéthers neutres, difonctionnels ou trifonctionnels ayant un indice OH se situant dans l'intervalle allant de 28 à 500, et éventuellement avec

a4) des alcools bivalents ou trivalents d'un indice OH se situant dans l'intervalle allant de 500 à 1 810,

tout en maintenant un rapport des équivalents NCO/OH de 1,7 : 1 à 5 : 1,

b) 3 à 25 parties en poids d'au moins un ester d'acide phosphorique de formule :

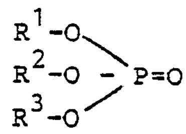

dans laquelle $R^1$, $R^2$ et $R^3$ représentent des radicaux identiques ou différents et désignent chacun un groupe phényle éventuellement substitué par un groupe alkyle en $C_1$-$C_{12}$, ou un radical d'hydrocarbure aliphatique saturé contenant 6 à 18 atomes de carbone,

c) 5 à 50 parties en poids d'un ou de plusieurs solvants inertes ayant un point d'ébullition se situant entre 40 et 140 °C, et

d) éventuellement d'autres agents auxiliaires et additifs connus en soi dans la technique chimique des polyuréthanes.

2. Utilisation des mélanges selon la revendication 1 comme adhésifs durcissables sous l'influence de l'humidité pour le collage de n'importe quels substrats flexibles ou non flexibles.

3. Utilisation des mélanges selon la revendication 1 comme agents d'enduction durcissables sous l'influence de l'humidité pour l'enduction de n'importe quels substrats flexibles ou non flexibles.